# EUROPÄISCHE PATENTSCHRIFT

(11) **EP 0 359 141 B1**
(45) Veröffentlichungstag und Bekanntmachung des Hinweises auf die Patenterteilung: **17.03.1993**
(21) Anmeldenummer: 89116598.7
(22) Anmeldetag: 08.09.1989
(51) Int. Cl.: B62D 25/20

(54) **Bodenwanne für ein Kraftfahrzeug**
Bottom part for an automotive vehicle
Partie de fond pour véhicule automobile

(30) Priorität: 16.09.1988 DE 3831480
(43) Veröffentlichungstag der Anmeldung: 21.03.1990
(73) Patentinhaber: AUDI AG, 85045 Ingolstadt (DE)
(72) Erfinder: Dietz, Jürgen, D-8074 Gaimersheim (DE); Eggerstedt, Uwe, D-8079 Walting (DE)
(74) Vertreter: Neubauer, Hans-Jürgen, Dipl.-Phys.

(56) Entgegenhaltungen:
- DE-A- 2 610 299
- DE-A- 2 848 593
- DE-A- 3 720 946
- DE-B- 1 177 499
- GB-A- 1 116 738
- PATENT ABSTRACTS OF JAPAN vol. 7, no. 55 (M-198)(1200) 05 März 1983, & JP-A-57 201776 (TOYOTA JIDOSHA KOYO KABUSHI) 10 Dezember 1982,

## Beschreibung

Die Erfindung betrifft eine Bodenwanne für ein Kraftfahrzeug, insbesondere für einen Personenkraftwagen, nach dem Oberbegriff des Anspruchs 1.

Bekannte Bodenwannen sind nur aus einem Bodenblech durchgehend hergestellt. Wegen der beträchtlichen Größe dieser Blechteile ergeben sich fertigungstechnische Schwierigkeiten und hohe Werkzeugkosten.

Es sind auch Bodenwannen für Kraftfahrzeuge bekannt (DE-A-1 177 499), die aus mehreren geformten und miteinander verbundenen Blechteilen bestehen. An den Verbindungen können durch Überlappungen und entsprechende Ausbildung der Randbereiche Hohlträger zur Versteifung der Bodenwanne gebildet werden.

Es ist weiter bekannt (DE-A-26 10 299), Bodenwannen unterschiedlicher Länge und Breite aus gleichen Einzelteilen dadurch herzustellen, daß die Randbereiche der Einzelblechteile mehr oder weniger überlappend verbunden werden.

Bei vielen Kraftfahrzeugen, insbesondere bei Personenkraftwagen, ist die Bodenwanne im mittleren Bereich in Fahrzeuglängsrichtung in der Form eines Tunnels gewölbt. Ein solcher Tunnel dient zur Verbindung und für die Durchführung von Bauteilen von der Vorderseite des Fahrzeugs zur Rückseite, z.B. für Auspuffrohre, Antriebswellen, Kabelstränge, etc.

Es ist dazu bekannt, eine Bodenwanne mit Tunnel aus einem separaten Tunnelblech und daran anschließenden, weiteren Blechteilen herzustellen.

Allgemein ergibt sich durch den in Längsrichtung der Bodenwanne verlaufenden Tunnelbogen eine unerwünscht weiche Bodenstruktur. Zudem sind bei der üblichen Herstellung der Bodenwannenbleche durch Tiefziehen relativ große Radien erforderlich, was ebenfalls zu der unerwünscht weichen Bodenstruktur beiträgt. Dies führt zu Problemen bei der Fahrzeugakustik. Durch die geringe Steifigkeit im Tunnelbereich fehlen zudem Auflage- und Befestigungsmöglichkeiten für weitere Aggregate, z.B. für das Getriebe. Um hier eine Verbesserung zu erzielen, ist es bekannt, mit relativ großem Aufwand zusätzliche Träger und Versteifungselemente einzuschweißen.

Es ist weiter eine gattungsgemäße Bodenwanne bekannt (DE-A-2 848 593), bei der solche Versteifungselemente integriert sind, indem der Tunnel von geschlossenen Hohlprofilen als Tunnelrandversteifungen teilweise begrenzt wird und die Hohlprofile an der Tunnellängsseite in der Höhe des Fahrzeugbodens verlaufen. Dadurch wird lediglich eine Versteifung in Tunnellängsrichtung erreicht.

Aufgabe der Erfindung ist es demgegenüber, eine Bodenwanne zu schaffen, die bei einfacher und preiswerter Herstellung eine verbesserte Steifigkeit aufweist.

Diese Aufgabe wird mit den Merkmalen des Anspruchs 1 gelöst.

Gemäß Anspruch 1 ist ein in Fahrzeuglängsrichtung verlaufender Tunnel von einem ringförmig geschlossenen Hohlprofilträger umgeben. Der Tunnel ist an der Vorder- und Rückseite bogenförmig nach oben gewölbt und in Längsrichtung offen. Der Hohlprofilträger läuft dementsprechend an den Tunnellängsseiten in der Höhe des Fahrzeugbodens und an der Vorder- und Rückseite des Tunnels bogenförmig nach oben gewölbt. Dadurch ergibt sich ein integriertes, vorderes und hinteres Tunneljoch.

Durch den ringförmig geschlossenen Hohlprofilträger mit einem vorderen und hinteren Tunneljoch wird bei einfacher und preiswerter Herstellung eine dynamisch sehr steife Bodenwanne erhalten. Die Krafteinleitung in die Bodenfläche kann daher akustisch günstiger bei verbessertem Schwingungsverhalten erfolgen.

Tunnelverstärkungen durch zusätzliche Träger und Verstärkungsbauteile können weitgehend entfallen.

Durch die hohe Steifigkeit im Tunnelbereich sind ohne Zusatzaufwand Lagerungsmöglichkeiten, z.B. für eine Getriebeaufhängung, geschaffen.

Nach Anspruch 2 wird der Hohlprofilträger durch einen um ein Tunnelblech ringförmig umlaufenden Trägerrand und daran anschließende Blechteile gebildet. Die anschließenden Blechteile überlappen mit Randbereichen den Trägerrand des Tunnelblechs und sind so geformt, daß sich durch die Überlappung und Verbindung der Hohlprofilträger ergibt. Dabei kann auch das Tunnelblech aus mehreren Einzelblechteilen hergestellt sein.

Mit diesen Merkmalen ergibt sich eine einfache Konstruktion und Herstellungsweise, wobei durch Änderungen in der Überlappungsbreite Variationen in der Länge und Breite der Bodenwanne zur Anpassung an unterschiedliche Fahrzeugtypen möglich sind.

Nach Anspruch 3 können vorteilhaft an das Tunnelblech bzw. dessen Trägerrand ohne weitere Zwischenbleche relativ großflächige Blechteile direkt angeschlossen werden, wie z.B. ein rechtes und linkes Bodenblech, eine Stirnwand des Fahrgastraums und ein hinteres Bodenblech. Dadurch wird die Herstellung unter Verwendung einer relativ kleinen Anzahl von Blechteilen einfach und preisgünstig.

Eine besonders bevorzugte Ausführungsform nach Anspruch 4 enthält am Trägerrand des Tunnelblechs ein nach oben offenes U-Profil, das durch einen ebenen Randbereich der anschließenden Blechteile zur Bildung des Hohlprofilträgers geschlossen ist. Damit ergibt sich eine besonders kostengünstige Herstellung der gesamten Hohlprofilträgeranordnung. Eine Variation in der Länge und Breite der Bodenwanne kann einfach durch Verschieben und unterschiedliche Überlappung der Blechteile erreicht werden.

Eine weitere Erhöhung der Steifigkeit der Bodenwanne wird nach Anspruch 5 dadurch erzielt, daß ein Verbindungsträger von an sich bekannten und üblicherweise vorhandenen Längsträgern der Bodenwanne zum umlaufenden Hohlprofilträger des Tunnels verläuft, so daß die Längsträger und der Tonnel-Hohlprofilträger miteinander verbunden sind.

Nach Anspruch 6 sind zwei Verbindungsträger vorgesehen, die etwa in Richtung der Verlängerung der Längsseiten des Hohlprofilträgers zur Frontseite des Fahrzeugs hin verlaufen und mit jeweils einem im Bereich eines Radkastens verlaufenden Längsträger verbunden sind. Damit ergibt sich eine Längsträger-Verbindungsträger-Anordnung in Y-Form. Durch diese Anordnung nimmt insbesondere bei einem Frontalaufprall der Hohlprofilträger am Tunnel ebenfalls Energie auf.

Wie bereits beschrieben, eignet sich der umlaufende Hohlprofilträger wegen der hohen Steifigkeit der Anordnung besonders gut zur Lagerung von zusätzlichen Bauteilen und Aggregaten. Nach Anspruch 7 ist es vorteilhaft, Verschraubungen von Anbauteilen und/oder weiteren Trägerbauteilen direkt am Hohlprofilträger des Tunnels anzubringen, beispielsweise in Form von Schweißmuttern, die innerhalb des Hohlprofilträgers liegen und dort angeschweißt sind. Dadurch wird erreicht, daß zwar der Hohlprofilträger durch die Verschraubung durchbrochen ist, jedoch die Bodenwanne insgesamt zur Fahrgastzelle hin keinen Durchbruch enthält und somit in jedem Fall dicht ist. Anhand einer Zeichnung wird eine Ausführungsform der Erfindung mit weiteren Merkmalen, Einzelheiten und Vorteilen näher erläutert.

Es zeigen
Fig. 1 eine in der Länge geschnittene Hälfte eines Tunnelblechs,
Fig. 2 einen Querschnitt durch das Tunnelblech nach Fig. 1 entlang der Linie A-A,
Fig. 3 die Hälfte eines schematischen Querschnitts durch eine Bodenwanne,
Fig. 4 einen schematischen Längsschnitt im vorderen Bereich des Tunnelblechs,
Fig. 5 einen schematischen Längsschnitt im hinteren Bereich des Tunnelblechs,
Fig. 6 eine schematische Draufsicht auf die Trägeranordnung im vorderen, linken Bereich eines Personenkraftwagens.

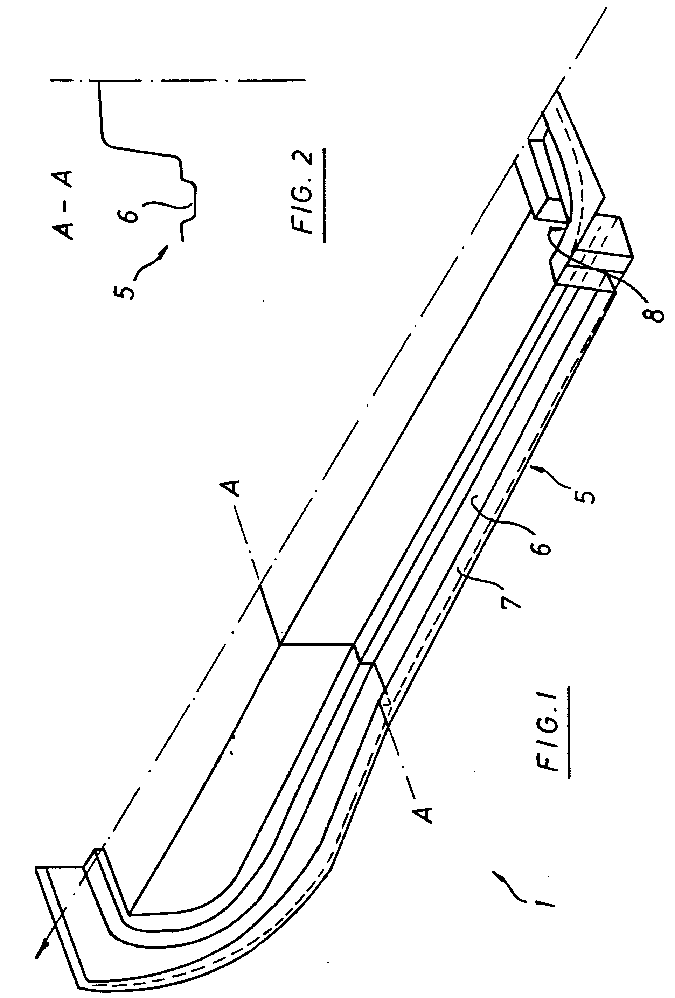

In Fig. 1 ist die linke Hälfte eines Tunnelblechs 1 dargestellt. Die rechte Hälfte ist dazu spiegelbildlich gleich.

Um den mittleren, nach oben gewölbten Teil des Tunnelblechs läuft ein Trägerrand 5. Der Trägerrand 5 folgt im vorderen und hinteren Bereich des Tunnelblechs 1 dessen Wölbung nach oben, so daß der Tunnel selbst von hinten nach vorne durchgängig ist.

Im Trägerrand 5 ist ein nach oben offenes U-Profil 6 geformt (sh. auch Querschnitt nach Fig. 2) mit einem seitlichen Randflansch 7. Dieses U-Profil 6 ist im rückwärtigen Teil des Tunnelblechs 1 in einem senkrechten Teil 8 nach oben gezogen. Dieser Anstieg könnte aber auch gleitend und allmählich erfolgen, so wie dies im vorderen Bereich des Tunnelblechs 1 durchgeführt ist.

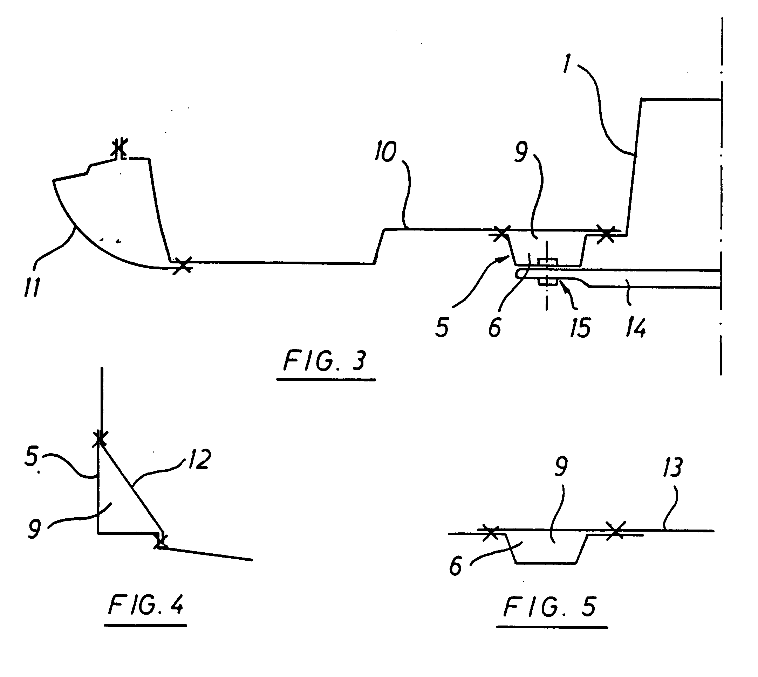

Aus den Fig. 3 bis 5 ist zu ersehen, wie mit Hilfe der an das Tunnelblech 1 bzw. den Trägerrand 5 anschließenden Blechteile ein geschlossener, am Tunnelblech 1 umlaufende Hohlprofilträger 9 erhalten wird.

Im Querschnitt der Fig. 3 ist das Tunnelblech 1 mit dem Trägerrand 5 bzw. U-Profil 6 zu erkennen. Das nach oben offene U-Profil 6 wird von einem Längsrandbereich eines anschließenden Bodenblechs 10 überdeckt und an den Anlageflächen verschweißt (schematisch durch Kreuze angedeutet). Mit dem Bodenblech 10 ist ein zur Fahrzeugaußenseite hin weisendes Schwellerblech 11 verbunden, durch das ebenfalls ein Hohlträger als Längsträger gebildet wird.

In Fig. 4 ist der vordere Teil des nach oben abgekanteten Trägerrandes 5 dargestellt, mit dem ein abgebogener Randbereich einer etwa senkrechten Stirnwand 12 des Fahrgastraums so verbunden ist, daß sich ein im Querschnitt etwa dreieckförmiger Hohlprofilträger 9 ergibt.

In Fig. 5 ist ein Längsschnitt durch den hinteren Bereich des eingebauten Tunnelblechs 1 dargestellt mit einem Schnitt durch das U-Profil 6 im rückwärtigen Anschluß an dessen senkrechten Teil 8. Ähnlich wie in Fig. 3 wird der Hohlprofilträger 9 auch hier dadurch gebildet, daß das U-Profil 6 durch den ebenen Randbereich eines hinteren Bodenblechs 13 überdeckt und an den Anlageflächen verschweißt ist.

Damit ergibt sich ein insgesamt am Tunnelblech 1 umlaufender Hohlprofilträger 9, der die Steifigkeit der Bodenwanne in diesem Bereich erheblich vergrößert.

In Fig. 3 ist ein Tunnelquerträger 14 eingezeichnet, der über eine Verschraubung 15 mit der Unterseite des Hohlprofilträgers 9 verbunden ist. Bei einer solchen Anordnung der Verschraubung 15 wird nur eine Verbindung in den Hohlprofilträger 9 geschaffen, jedoch nicht nur Innenseite des Fahrgastraums hin, so daß keine Dichtigkeitsprobleme zum Fahrgastraum hin in diesem Bereich auftreten können.

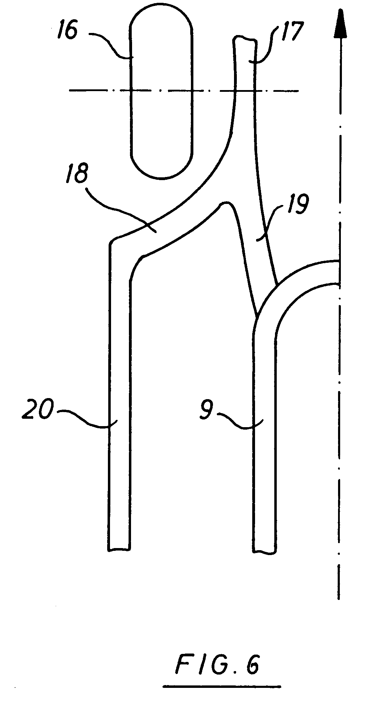

Fig. 6 zeigt schematische die Anordnung von Trägern in einer Draufsicht auf den vorderen, linken Bereich eines Kraftfahrzeugs. Von der Vorderseite her erstreckt sich im Bereich des Radkastens für ein linkes Vorderrad 16 ein Längsträgerteil 17, das sich nach dem Bereich des Radkastens Y-förmig in ein Trägerteil 18 und einen Verbindungsträger 19 gabelt. Das Trägerteil 18 geht in den als Längs-Hohlträger ausgebildeten Schweller 20 über, während der Verbindungsträger 19 eine etwa in Längsrichtung verlaufende Verbindung zum am Tunnel umlaufenden Hohlprofilträger 9 herstellt. Damit wird insbesondere bei einem Frontaufprall auch Energie in die steife Hohlprofilträgeranordnung am Tunnel eingeleitet.

## Patentansprüche

1. Bodenwanne für ein Kraftfahrzeug, insbesondere für einen Personenkraftwagen, die aus mehreren geformten Blechteilen besteht, bei der ein in Fahrzeuglängsrichtung verlaufender Tunnel von geschlossenen Hohlprofilen als Hohlprofilträger teilweise begrenzt wird und die Hohlprofile an der Tunnellängsseite in der Höhe des Fahrzeugbodens verlaufen,
dadurch gekennzeichnet,
daß der Hohlprofilträger (9) den Tunnel ringförmig umgibt und
daß der Hohlprofilträger (9) an der Vorderseite und an der Rückseite des Tunnels bogenförmig nach oben verläuft, so daß ein vorderes und hinteres Tunneljoch gebildet wird.

2. Bodenwanne nach Anspruch 1, dadurch gekennzeichnet, daß der Hohlprofilträger (9) durch einen um ein Tunnelblech (1) ringförmig umlaufenden Trägerrand (5) und daran anschließende Blechteile (10, 12, 13) gebildet ist, wobei die anschließenden Blechteile (10, 12, 13) mit Randbereichen den Trägerrand (5) des Tunnelblechs (1) zumindest teilweise überlappen und der Trägerrand (5) und die Randbereiche so geformt sind, daß sich durch die Überlappung der Hohlprofilträger (9) ergibt.

3. Bodenwanne nach Anspruch 2, dadurch gekennzeichnet, daß an den Längsseiten des Tunnelblechs (1) ein linkes und ein rechtes Bodenblech (10), an der Rückseite des Tunnelblechs (1) ein hinterer Boden (13) und an der Vorderseite des Tunnelblechs (1) eine Stirnwand (12) die anschließenden Blechteile zur Bildung des umlaufenden Hohlprofilträgers (9) sind.

4. Bodenwanne nach Anspruch 2 oder 3, dadurch gekennzeichnet, daß der am Tunnelblech (1) umlaufende Trägerrand (5) als nach oben offenes U-Profil (6) ausgebildet ist, das durch einen ebenen Randbereich der anschließenden Blechteile (10, 12, 13) zur Bildung des Hohlprofilträgers (9) geschlossen ist.

5. Bodenwanne nach einem der Ansprüche 1 bis 4, dadurch gekennzeichnet, daß ein Verbindungsträger (19) von wenigstens einem an sich bekannten Längsträger (17) der Bodenwanne zum Hohlprofilträger (9) des Tunnels verläuft.

6. Bodenwanne nach Anspruch 5, dadurch gekennzeichnet, daß beidseitig je ein Verbindungsträger (19) vorgesehen ist, die etwa in Richtung der Verlängerung der Längsseiten des Hohlprofilträgers (9) zur Fahrzeugfrontseite hin weisen und mit jeweils einem im Bereich eines Radkastens verlaufenden Längsträger (17) verbunden sind.

7. Bodenwanne nach einem der Ansprüche 1 bis 6, dadurch gekennzeichnet, daß Verschraubungen (15) von Anbauteilen und/oder weiteren Trägerteilen (14) am Hohlprofilträger (9) des Tunnels angebracht sind.

## Claims

1. Floor pan for a motor vehicle, more particularly for a passenger car, said pan consisting of a plurality of shaped sheet-metal parts and having a tunnel extending in the vehicle's longitudinal direction and in part bounded by closed hollow sections so as to act as a support for the hollow sections, the hollow sections running level with the floor of the vehicle on the longitudinal side of the tunnel,
characterised in that:
- the support (9) for the hollow sections surrounds the tunnel in a ring and
- on the front and rear sides of the tunnel, the support (9) for the hollow sections extends upwards in an arc to form a front and rear tunnel yoke.

2. Floor pan according to claim 1, characterised in that the support (9) for the hollow sections is formed by a supporting rim (5) which runs in a ring around a tunnel plate (1) and by sheet-metal parts (10, 12, 13) adjoining said rim, the adjoining sheet metal parts (10, 12, 13) at least partially overlapping peripheral areas of the supporting rim (5) of the tunnel plate (1) and the supporting rim (5) and the peripheral areas being so shaped that the overlap produces the support (9) for the hollow sections.

3. Floor pan according to claim 2, characterised in that on the longitudinal sides of the tunnel plate (1) a left-hand and a right-hand floor (10), on the rear side of the tunnel plate (1) a rear floor (13) and on the front side of the tunnel plate (1) an end wall (12) constitute the adjoining sheet-metal parts to form the surrounding support (9) for the hollow sections.

4. Floor pan according to claim 2 or 3, characterised in that the supporting rim (5) which runs around the tunnel plate (1) is a channel section (6) open at the top, which is closes by a plane peripheral area of the adjoining sheet-metal part (10, 12, 13) so as to form the support (9) for the hollow sections.

5. Floor pan according to one of claims 1 to 4, characterised in that a connecting support (19) extends from at least one per se known longitudinal floor pan support (7) to the tunnel support (9) for the hollow sections.

6. Floor pan according to claim 5, characterised in that on each of the two sides are provided connecting supports (19) which point more or less in the direction of the extension of the longitudinal sides of the support (9) for the hollow sections towards the front of the vehicle and are each joined to a longitudinal support (17) extending in the vicinity of a wheel house.

7. Floor pan according to any of claims 1 to 6, characterised in that screwed connections (15) of external fixtures and/or additional support parts (14) are mounted on the tunnel support (9) for the hollow sections.

## Revendications

1. Bac de plancher pour un véhicule automobile, notamment pour une voiture particulière, qui est constitué de plusieurs pièces de tôle façonnées et dans lequel un tunnel s'étendant dans la direction longitudinale du véhicule est partiellement délimité par des profils creux fermés qui servent de profils creux porteurs et qui s'étendent sur le côté longitudinal du tunnel à hauteur du plancher du véhicule,
**caractérisé**
en ce que le profil creux porteur (9) entoure annulairement le tunnel, et en ce que le profil creux porteur (9) est galbé vers le haut à l'avant et à l'arrière du tunnel, formant ainsi une arche de tunnel avant et une arche de tunnel arrière.

2. Bac de plancher selon la revendication 1, **caractérisé** en ce que le profil creux porteur (9) est formé par un bord porteur (5) entourant annulairement la tôle de tunnel (1) et par des pièces de tôle (10, 12, 13) qui se raccordent au bord porteur (5), les pièces de tôle raccordées (10, 12, 13) recouvrant au moins partiellement le bord porteur (5) de la tôle de tunnel (1) par des régions marginales, et le bord porteur (5) ainsi que les régions marginales étant façonnés de telle sorte que le profil creux porteur (9) est obtenu par ledit recouvrement.

3. Bac de plancher selon la revendication 2, **caractérisé** en ce que les pièces de tôle raccordées pour la formation du profil creux porteur entourant (9) sont une tôle de plancher gauche (10) et une tôle de plancher droite (10) sur les côtés longitudinaux de la tôle de tunnel (1), un plancher arrière (13) à l'arrière de la tôle de tunnel (1) et un tablier (12) à l'avant de la tôle de tunnel (1).

4. Bac de plancher selon la revendication 2 ou 3, **caractérisé** en ce que le bord porteur (5) entourant la tôle de tunnel (1) est réalisé sous la forme d'un profil en U (6), qui est ouvert vers le haut et qui, afin de former le profil creux porteur (9), est fermé par une région marginale plane des pièces de tôle raccordées (10, 12, 13).

5. Bac de plancher selon l'une quelconque des revendications 1 à 4, **caractérisé** en ce qu'un élément porteur de jonction (19) s'étend depuis au moins un longeron (17) en soi connu du bac de plancher jusqu'au profil creux porteur (9) du tunnel.

6. Bac de plancher selon la revendication 5, **caractérisé** en ce que des éléments porteurs de jonction respectifs (19) sont prévus de chaque côté, sont orientés vers l'avant du véhicule, approximativement dans la direction du prolongement des côtés longitudinaux du profil creux porteur (9), et sont assemblés à un longeron respectifs (17) s'étendant dans la région d'un passage de roue.

7. Bac de plancher selon l'une quelconque des revendications 1 à 6, **caractérisé** en ce que des raccords à vis (15) pour des éléments rapportés et/ou des éléments porteurs supplémentaires (14) sont montés sur le profil creux porteur (9) du tunnel.
